# EUROPEAN PATENT APPLICATION

(11) **EP 3 537 199 A1**
(43) Date of publication of application: **11.09.2019**
(21) Application number: 18203639.2
(22) Date of filing: 31.10.2018
(51) Int. Cl.: G02B 7/02, G02B 13/16, H04N 5/74

(54) **LENS MODULE AND PROJECTION DEVICE**

(30) Priority: 08.03.2018 CN 201810191103
(71) Applicant: Coretronic Corporation, Hsin-Chu 300 (TW)
(72) Inventor: LIN, Shiuan-Ting, 300 Hsin-Chu (TW); CHENG, Chuan-Te, 300 Hsin-Chu (TW); LIANG, Yu-Lin, 300 Hsin-Chu (TW)
(74) Representative: Ter Meer Steinmeister & Partner

(57) **Abstract**

A lens module adapted to provide an image light beam is provided. The lens module includes a position-limiting element (150), a first lens, a second lens (120) and a third lens (130). The first lens (110) is disposed at one side of the position-limiting element. The second lens (120) is disposed at another side of the position-limiting element (150). The second lens (120) is located between the position-limiting element (150) and the third lens (130). The periphery of each of the position-limiting element (150), the second lens (120) and the third lens (130) includes at least one connecting structure. The first lens (110), the position-limiting element (150), the second lens (120) and the third lens (130) fit with each other by the at least one connecting structures to stack and form a lens module. In the invention, the volume of the lens module is reduced in order to reduce the weight of a projection device.

## Description

This application claims the priority of China application serial no. 201810191103.9, filed on March 8, 2018.

### BACKGROUND

### Field of the Invention

The invention relates to an optical module and a display device, and more specifically relates to a lens module and a projection device, and the projection device is applied to a near eye display device.

### Description of Related Art

In recent years, along with development of the industrial technology, the type, the function, and the usage method of the electronic device become more and more diversified, the wearable display devices which can directly worn on the body of the user appear. There are quite a few types of head-mounted display devices, such as eyeglasses head mounted display device. After wearing these types of display devices, not only can the user see enlarged images or three-dimensional images, the images are also changed according to rotation of the head of the user, so as to provide more immersive experience for the user.

However, recently, the reflective panel in the display device is designed to further include lighting optical systems and prisms, which causes the increment in volume and weight of the display device. Therefore, size and weight are important factors in designing the eyepiece. However, in the recent practice, the lenses are fixed to each other by addition fixing elements, which are disposed therebetween, such as spaced ring, clamping ring, or lens cone, etc. As a result, the lens itself becomes oversized or overweight so as affect/influence the imaging quality of the lens, and the user also feels inconvenient and uncomfortable while wearing the head-mounted display device.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention were acknowledged by a person of ordinary skill in the art.

### SUMMARY

The invention provides a lens module and a projection device capable of reducing the volume of the lens module and reducing the weight of the projection device.

The other objectives and advantages of the invention can be further understood through the technical features disclosed in the invention.

The object is solved by the features of the independent claims. Preferred embodiments are given in the dependent claims.

In order to achieve at least one of the above-mentioned objectives, one embodiment of the invention provides a lens module configured to provide an image light beam. The lens module includes a position-limiting element, a first lens, a second lens and a third lens. The first lens is disposed at one side of the position-limiting element. The second lens is disposed at another side of the position-limiting element. The second lens is located between the position-limiting element and the third lens. A periphery of each of the position-limiting element, the second lens and the third lens includes at least one connecting structure. The first lens, the position-limiting element, the second lens and the third lens fit with each other by the respective connecting structures to stack and form the lens module.

Preferably, the lens module may further comprising a stop located at a light emitting side of the lens module, wherein an effective diameter of the first lens is greater than an effective diameter of the stop.

Preferably, an effective diameter of the first lens is smaller than an effective diameter of the second lens and an effective diameter of the third lens.

Preferably, each lens in the lens module is a plastic lens.

Preferably, the first lens has at least one connecting structure.

Preferably, the at least one connecting structure is disposed at a periphery of the first lens.

Preferably, the periphery of the first lens has a circular shape.

Preferably, each of the peripheries of the position-limiting element, the second lens, and the third lens has a rectangular shape,

Preferably, each of the second lens and the third lens has an outer shape integrally formed by extending the periphery outside its effective diameter.

Preferably, the at least one connecting structure of each of the position-limiting element, the second lens, and the third lens comprises four connecting structures respectively located at four corners.

Preferably, a size of the position-limiting element is greater than or equal to a size of each lens in the lens module.

Preferably, an effective diameter of the second lens is greater than an effective diameter of the third lens.

Preferably, the at least one connecting structure is a mesa structure, double-mesa structure, or recess structure.

Preferably, the lens module may further comprise a plurality of adhesive layers, respectively disposed in gaps between adjacent connecting structures.

Preferably, the lens module may further comprise a fourth lens.

Preferably, the third lens is located between the second lens and the fourth lens.

Preferably, the fourth lens comprises at least one connecting structure and is stacked on the third lens by fitting the at least one connecting structure of the fourth lens with the at least one connecting structure of the third lens.

Preferably, a periphery of the fourth lens has a rectangular shape integrally formed by extending a periphery outside of an effective diameter of the fourth lens.

Preferably, the effective diameter of the fourth lens is smaller than the effective diameter of the third lens.

Preferably, the lens module may further comprise a first light-shielding element disposed between the second lens and the third lens, and/or a second light-shielding element disposed between the third lens and the fourth lens.

To achieve at least one of the above-mentioned objectives, another embodiment of the invention provides a projection device configured to provide a projection light beam to a pupil. The projection device includes an optical engine module and a lens module. The lens module connects with the optical engine module. The lens module includes a first lens, a position-limiting element, a second lens and a third lens sequentially stacked on each other from a light emitting side to a side of the optical engine module. A periphery of each of the position-limiting element, the second lens and the third lens includes at least one connecting structure. The first lens, the position-limiting element, the second lens and the third lens fit with each other by the respective connecting structures to stack and form the lens module.

Preferably, the lens module may further comprise a stop located at the light emitting side of the lens module, the lens module is located between the stop and the optical engine module, and an effective diameter of the first lens is greater than an effective diameter of the stop.

Preferably, the projection device may further comprise a case configured to connect with the optical engine module.

Preferably, the lens module is disposed in the case and connected to the optical engine module.

Preferably, an outer shape of the lens module fits with inner wall of the case.

Preferably, the first lens has at least one connecting structure, and the at least one connecting structure is disposed at a periphery of the first lens

Based on the above, the embodiments of the invention have at least one of the advantages or effects below. In the embodiment of the invention, the position-limiting element, the second lens and the third lens fit with each other by their respective connecting structures to stack and form the lens module. Therefore, a good optical quality is achieved without any additional fixing mechanism, so as to reduce the volume of the lens module and to reduce the weight of the projection device.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view of architecture of a projection device of one embodiment of the invention.
Fig. 2 is a schematic view of architecture of a projection device of another embodiment of the invention.
FIG. 3 is a three-dimensional schematic view of the projection device in FIG. 1.
FIG. 4 is a three-dimensional schematic view illustrating the assembly of the projection device in FIG. 3.
FIG. 5 is a three-dimensional exploded view of the projection device in FIG. 3.
FIG. 6 is a three-dimensional exploded view of the projection device in FIG. 5 at a different angle.
FIG. 7 is a partial cross-sectional schematic view of the projection device in FIG. 3 along a section line A-A.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

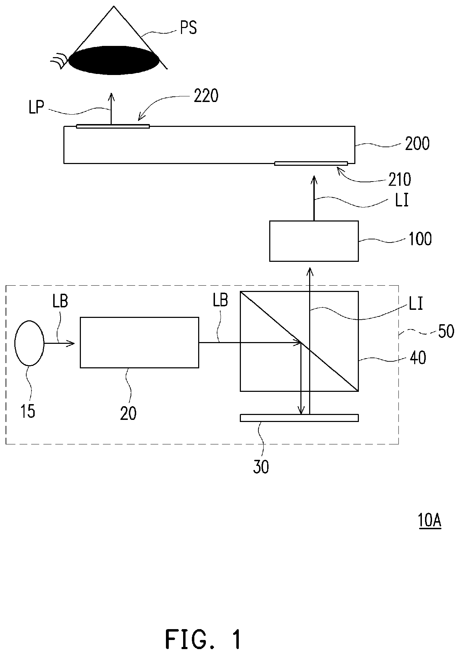

FIG. 1 is a schematic view of architecture of a projection device of one embodiment of the invention. Referring to FIG. 1, in the embodiment, a projection device 10A includes an optical engine module 50, a lens module 100, and a light guiding device 200. The optical engine module 50 includes a light source 15, an optical module 20, an imaging element 30, and a prism element 40. In operation, the light source 15 emits an illuminating light beam LB, the illuminating light beam LB is transmitted through the optical module 20 and then is transmitted to the imaging element 30 by the prism element 40, so as to form an image light beam LI by the imaging element 30. The image light beam LI is transmitted through the lens module 100 to the light guiding device 200, enters the light guiding device 200 through the coupling inlet 210 of the light guiding device 200, so that a projection light beam LP is projected out from a coupling outlet 220 of the light guiding device 200 and then is projected to a pupil PS.

The light source 15 may include one or a plurality of light-emitting diodes or may include one or a plurality of laser diodes, for example. The light source 15 is configured to provide the illuminating light beam LB. The illuminating light beam LB is, for example, a single color light having one wavelength range or is a light which is a mix of light beams having different wavelengths, such as white light is a mix of red, green and blue lights, but the invention is not limited thereto. The model and type of the light source 15 and the wavelength range of the illuminating light beam LB are not limited in the invention.

The optical module 20 is disposed on the transmission path of the illuminating light beam LB for uniformly transmitting the illuminating light beam LB to the prism element 40. The optical module 20 includes one or more lenses and a lens array, which are disposed on the transmission path of the illuminating light beam LB between the light source 15 and the prism element 40. In one embodiment, the optical module 20 may have a fixed focal length or zoom function, and may also have the function of distributing the illuminating light beam LB uniformly.

The imaging element 30 may be, for example, a reflective or transmissive spatial light modulator (SLM). The reflective SLM may be, for example, a reflective liquid crystal on silicon (LCOS) or a digital micro-mirror device (DMD). The transmissive SLM may be, for example, a transparent liquid crystal panel. However, the model and type of the imaging element 30 is not limited in the invention. In the embodiment, the detailed steps and implementation of the method of producing/forming the image light beam LI by the imaging element 30 can be taught, suggested, and obtained from the general knowledge in the field of technology.

The prism element 40 includes one or more translucent prisms, but the invention is not limited thereto. The prism element 40 is configured to guide the illuminating light beam LB to the imaging element 30 in order to generate the image light beam LI and is configured to guide the image light beam LI to the lens module 100.

The light guiding device 200 may be a waveguide plate as an example, and the number of the light guiding device 200 may be one or more plates and is adjusted according to requirements, but the invention is not limited thereto. In the embodiment, the light guiding device 200 is one waveguide plate as an example, and there may be an optical structure, which is used to guide the image light beam LI, inside the light guiding device 200. The model and type of the light guiding device 200 are not limited in the invention.

The pupil PS may be the pupil of the user's eye or the aperture of an image capture device (such as a video camera). The model and type of the pupil PS are not limited in the invention.

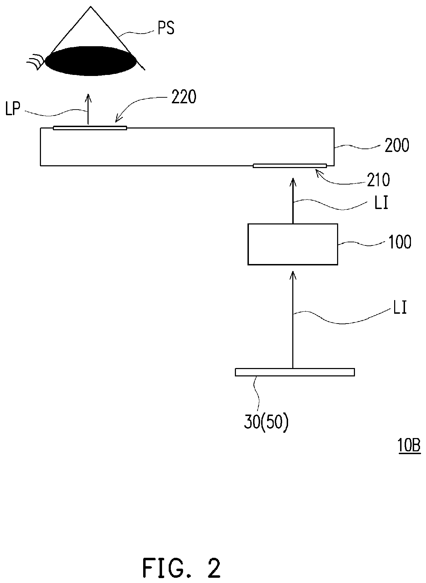

FIG. 2 is a schematic view of architecture of a projection device of another embodiment of the invention. Referring to FIG. 2, a projection device 10B of the embodiment is similar to the projection device 10A in FIG. 1, the differences are that, in the embodiment, the optical engine module 50 of the projection device 10B includes only one self-luminous imaging element 30. In operation, the image light beam LI emitted from the imaging element 30 is transmitted through the lens module 100 and enters the light guiding device 200 through the coupling inlet 210 of the light guiding device 200, so that the projection light beam LP is emitted from the coupling outlet 220 of the light guiding device 200 and then is projected to the pupil PS. The imaging element 30 may be a self-luminous device, such as an organic light-emitting diode display (OLED display) or a micro light-emitting diode (Micro LED), etc. The model and type of the imaging element 30 are not limited in the invention.

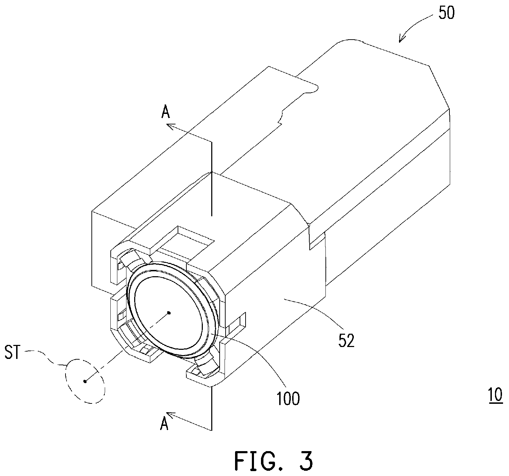

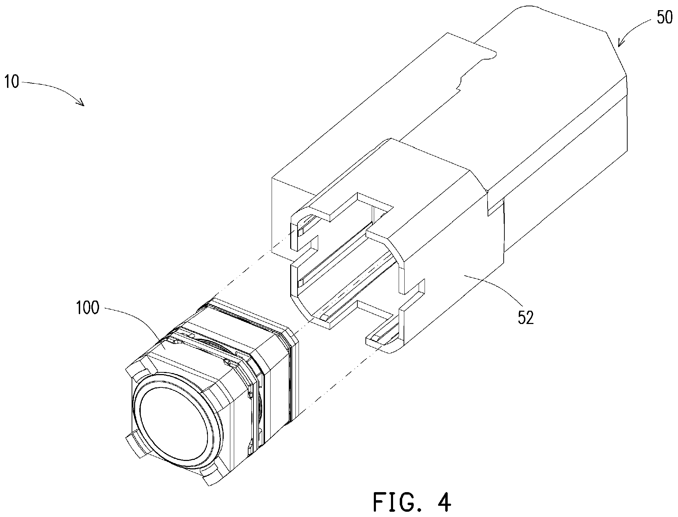

FIG. 3 is a three-dimensional schematic view of the projection device in FIG. 1. FIG. 4 is a three-dimensional schematic view illustrating the assembly of the projection device in FIG. 3. Referring to FIG. 3 and FIG. 4, in the embodiment, the projection device 10 includes an optical engine module 50 and a lens module 100. A case 52 is connected with the optical engine module 50, and the lens module 100 is disposed inside the case 52 and is connected to the optical engine module 50. In the embodiment, the model and type of the optical engine module 50 may be is the same with that of the optical engine module 50 in FIG. 1 and that of the optical engine module 50 in FIG. 2, the invention is not limited thereto. Moreover, in the embodiment, the optical engine module 50 and the lens module 100 may also be applied to a virtual reality system, augmented reality system, mixed reality system according to the type of the projection device 10, the invention is not limited thereto. Referring to FIG. 1 and FIG. 3, the image light beam LI converges to a stop ST, and the image light beam LI diverges after going through the stop ST, wherein the stop ST refers to a location that the image light beam LI converges to have the minimum beam diameter. In the embodiment, the stop ST is located at a light emitting side (the side that the image light beam is projected) of the lens module 100, so the lenses in the lens module 100 are sequentially stacked on each other from the stop ST (the light emitting side) to a side of the optical engine module 50. The stop ST may be located at the coupling inlet 210 of the light guiding device 200 by adjusting the distance between the lens module 100 of the projection device 10A and the coupling inlet 210 of the light guiding device 200. Moreover, the effective diameter of the stop ST can be adjusted, in the embodiment, the distance between the lens module 100 and the coupling inlet 210 of the light guiding device 200 is roughly from 6 to 15.5 millimeters. The effective diameter of the stop ST is roughly equal to 3.84 mm, but the invention is not limited thereto.

In the embodiment, the lens module 100 is assembled into the optical engine module 50 through an opening of the case 52, as shown in FIG. 4, and the outer shape of the lens module 100 fits with the inner wall of the case 52, as shown in FIG. 3, in the embodiment, the outer shape of the lens module 100 is an octagonal shape. In a conventional way, when the lens module and the optical engine module are fixed to each other, the external of the external of the lens module must be configured to have a fixing mechanism, such as a flange, which contacts and fixes to the optical engine module. However, it is not necessary to configure the lens module 100 of the embodiment to have the fixing mechanism, such as a flange, serving as the fixing interface between the lens module 100 and the optical engine module 50. For example, the lens module 100 is directly pushed into the case 52 without using a structure, such as a flange, to fix the lens module 100 and the optical engine module to each other. As a result, the interference between the lens module 100 and the optical engine module 50 caused by the fixing mechanism can be avoided, so the weight and volume of the projection device 10 itself is reduced to improve the optical quality of the projection device 10 and make the projection device 10 lighter. In other words, the lens module 100 of the embodiment exploits modular design without lens tube to fix to the optical engine module 50.

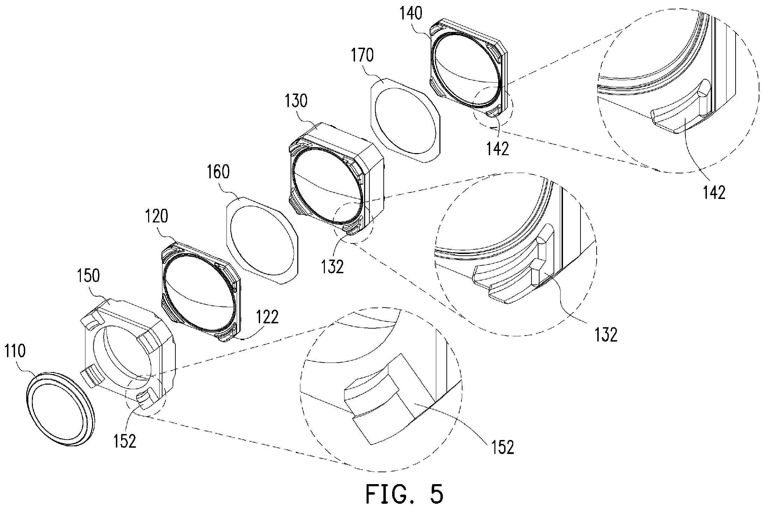

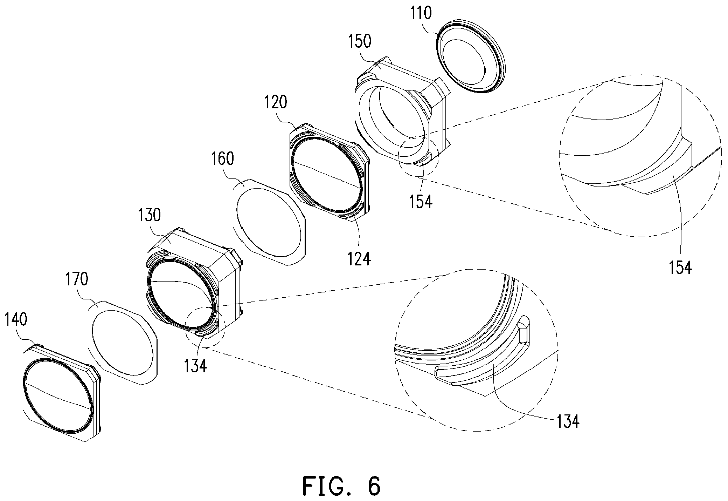

FIG. 5 is a three-dimensional exploded view of the projection device in FIG. 3. FIG. 6 is a three-dimensional exploded view of the projection device in FIG. 5 at a different angle. Referring to FIG. 4 to FIG. 6 simultaneously, the lens module 100 includes a first lens 110, a position-limiting element 150, a second lens 120 and a third lens 130 sequentially stacked on each other from a light emitting side to a side of the optical engine module 50, the periphery of each of the position-limiting element 150, the second lens 120 and the third lens 130 includes at least one connecting structure (such as the connecting structures 122, 124, 132, 134, 152 and 154 shown in FIG. 5 and FIG. 6), and the position-limiting element 150, the second lens 120 and the third lens 130 fit with each other by the at least one connecting structure to stack and form the lens module 100. In the embodiment, the lens module 100 further includes a fourth lens 140, and the third lens 130 is located between the second lens 120 and the fourth lens 140. The fourth lens 140 includes at least one connecting structure 142 and is stacked on the third lens 130 by fitting the at least one connecting structure 142 with the at least one connecting structure 134 of the third lens 130. In other words, in other embodiments, the lens module 100 may be designed to accommodate more or less lenses, but the invention is not limited thereto. Otherwise, in the embodiment, the volume of the lens module 100 may be 3.5 cubic centimeter (CC).

In the embodiment, the size of the position-limiting element 150 is greater than or equal to the size of each lens in the lens module 100. More specifically, in the embodiment, the size of the first lens 110 is smaller than the size of the position-limiting element 150, and the size of each of the second lens 120, the third lens 130, and the fourth lens 140 is equal to the size of the position-limiting element 150, but the invention is not limited thereto. As a result, in the lens module 100, all of the lenses are stacked according to the position-limiting element 150 as a baseline so as to form the lens module 100, and the inner wall of the case 52 fits with the outer shape of the position-limiting element 150 so the lens module 100 is firmly assembled.

In the embodiment, the first lens 110, the second lens 120, the third lens 130, and the fourth lens 140 are plastic lenses, the periphery of the first lens 110 has a circular shape, each of the peripheries of the position-limiting element 150, the second lens 120, the third lens 130, and the fourth lens 140 has a rectangular shape, wherein each of the second lens 120, the third lens 130 and the fourth lens 140 has an outer shape integrally formed by extending the periphery outside its effective diameter. In other words, in the lens module 100 of the embodiment, the lenses all are plastic lenses, and the second lens 120, the third lens 130, and the fourth lens 140 are rectangular plastic lenses. In the lens module 100 of the other embodiment, the lenses all are plastic lenses, and the second lens 120, the third lens 130, and the fourth lens 140 are square plastic lenses. Therefore, the peripheries outside the effective diameters of the second lens 120, the third lens 130, and the fourth lens 140 may be configured to have at least one connecting structure 122, 124, 132, or 134 as shown in FIG. 5 and FIG. 6. For example, the outer size of the first lens 110 is represented by the diameter and is equal to 8.6mm, the outer size of the second lens 120 is 9.6x9.6 mm, the outer size of the third lens 130 is 9.6x9.6 mm, the outer size of the fourth lens 140 is 9.6x9.6 mm, and the outer size of the position-limiting element 150 is 9.6x9.6 mm.

In the embodiment, the at least one connecting structure on one side of each of the position-limiting element 150, the second lens 120, the third lens 130, and the fourth lens 140 having rectangular shape includes four connecting structures respectively located at four corners, and each of the connecting structures may be a mesa structure, double-mesa structure, or recess structure. However, the type and model of each connecting structure in the lens module 100 is not limited in the invention.

To be more specific, there are connecting structures 152 and 154 respectively disposed on two opposite sides of the position-limiting element 150, and, for example, the connecting structure 152 is a mesa structure and the connecting structure 154 is a recess structure. The inner diameter of the connecting structure 152 on the side, which faces the stop ST, of the position-limiting element 150 is configured to accommodate and retain the outer of the first lens 110. Therefore, the first lens 110 can be firmly fitted inside the connecting structure 152 of the position-limiting element 150 without any other additional fixing mechanism, so as to reduce the occupied volume of the lens module 100. There are connecting structures 122 and 124 respectively disposed on two opposite sides of the second lens 120, and the connecting structures 122 and 124 all are mesa structures, for example. The connecting structure 154 on the side, which faces the optical engine module 50, of the position-limiting element 150 is configured to accommodate the connecting structure 122 on the side, which faces the stop ST, of the second lens 120. Therefore, the second lens 120 can be firmly fitted inside the connecting structure 154 of the position-limiting element 150 without any other additional fixing mechanism.

Moreover, there are connecting structures 132 and 134 respectively disposed on two opposite sides of the third lens 130, and, for example, the connecting structure 132 is a double-mesa structure and the connecting structure 134 is a mesa structure. The inner diameter of the connecting structure 132 on the side, which faces the stop ST, of the third lens 130 is configured to accommodate the outer of the connecting structure 124 on the side, which faces the optical engine module 50, of the second lens 120. Therefore, the second lens 120 can be firmly fitted inside the connecting structure 132 of the third lens 130 without any other additional fixing mechanism. There is a connecting structure 142 on a side, which faces the stop ST, of the fourth lens 140, and the connecting structure 142 is a mesa structure, for example. The inner diameter of the connecting structure 142 on the side, which faces the stop ST, of the fourth lens 140 is configured to accommodate the outer of the connecting structure 134 on the side, which faces the optical engine module 50, of the third lens 130. Therefore, the third lens 130 can be firmly fitted inside the connecting structure 142 of the fourth lens 140 without any other additional fixing mechanism. Consequently, the lens module 100 can firmly assembled by fitting the connecting structures of the position-limiting element 150, the second lens 120, the third lens 130, and the fourth lens 140 with each other, so that a good optical quality is achieved and no additional fixing mechanism is required. As a result, the volume of the lens module 100 is further reduced, and the weight of the projection device 10 is also reduced.

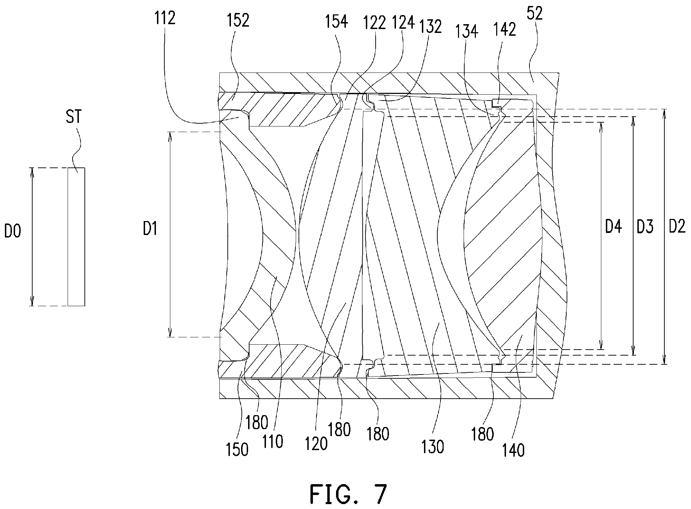

FIG. 7 is a partial cross-sectional schematic view of the projection device in FIG. 3 along a section line A-A. Referring to FIG. 3, FIG. 5, FIG. 6, and FIG. 7, in the embodiment, an effective diameter D1 of the first lens 110 is greater than an effective diameter D0 of the stop ST. The effective diameter D1 of the first lens 110 is smaller than each of an effective diameter D2 of the second lens 120, an effective diameter D3 of the third lens 130, and an effective diameter D4 of the fourth lens 140. In addition, the effective diameter D2 of the second lens 120 is greater than the effective diameter D3 of the third lens 130, and the effective diameter D3 of the third lens 130 is greater than the effective diameter D4 of the fourth lens 140. For example, the effective diameter D0 of the stop ST is 3.84mm, the effective diameter D1 of the first lens 110 is 6mm, the effective diameter D2 of the second lens 120 is 8.4mm, the effective diameter D3 of the third lens 130 is 8.2mm, and the effective diameter D4 of the fourth lens 140 is 7.8mm, but the invention is not limited thereto. That is, in the embodiment, after passing through the prism element 40 inside the optical engine module 50, the image light beam LI emitted from the optical engine module 50 enters the lens module 100 through the fourth lens 140. The fourth lens 140 is, for example, a bi-convex lens and makes the image light beam LI converge to the third lens 130, the third lens 130 is, for example, a concave lens and makes the image light beam LI diverge to the second lens 120, and the second lens 120 is, for example, a convex lens and makes the image light beam LI converge to the first lens 110.

It is worth mentioning that, after the image light beam is transmitted to the third lens 130, the marginal ray, which has maximum angle of view, leaves the third lens 130 in a direction away from the optical axis. After the image light beam enters the second lens 120, the marginal ray, which has maximum angle of view, turns in a direction toward the optical axis. Therefore, the effective diameter D1 of the first lens 110 is smaller than the effective diameter D2 of the second lens 120. Moreover, the image light beam leaving the first lens 110 converges to the stop ST and enters the coupling inlet of the light guiding device (such as the coupling inlet 210 of the light guiding device 200 shown in FIG. 1), and the light guiding device projects the projection light beam LP to the pupil PS. Moreover, the effective diameter D0 of the stop ST is smaller than the effective diameter D1 of the first lens 110.

Besides, in the embodiment, the lens module 100 further includes a first light-shielding element 160 and a second light-shielding element 170. The first light-shielding element 160 is disposed between the second lens 120 and the third lens 130. The second light-shielding element 170 is disposed between the third lens 130 and the fourth lens 140. As a result, the shielding effect is provided at the peripheries of the lenses in the lens module 100, so as to further increase optical quality.

Moreover, in the embodiment, the lens module 100 further includes a plurality of adhesive layers 180 respectively disposed in gaps between the adjacent connecting structures. As a result, the structural stability is further improved so as to achieve a good optical quality. In the embodiment, the adhesive layer 180 may be glue, for example. For example, the adhesive layer 180 is ultraviolet light curing adhesive that is provided between the connecting structures by spot gluing/dispensing method, and then ultraviolet light is irradiated to cure the adhesive layer 180 so as to fix the elements in the lens module 100, but the invention is not limited thereto.

Referring to FIG. 7, in the embodiment, the first lens 110 may also have a connecting structure 112, and the connecting structure 112 is disposed at the periphery of the first lens 110, but the invention is not limited thereto.

In summary, the embodiments of the invention have at least one of the advantages or effects below. In the embodiment of the invention, the position-limiting element, the second lens and the third lens fit with each other by the respective connecting structures to stack and form the lens module. Therefore, a good optical quality is achieved without any additional fixing mechanism, so as to reduce the volume of the lens module and to reduce the weight of the projection device.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the present disclosure is intended to be dedicated to the public regardless of whether the element or component is explicitly recited in the following claims.

## Claims

1. A lens module (100), configured to provide an image light beam, comprising:
a position-limiting element (150);
a first lens (110) disposed at one side of the position-limiting element (150);
a second lens (120) disposed at another side of the position-limiting element (150); and
a third lens (130),
wherein the second lens (120) is located between the position-limiting element (150) and the third lens (130),
a periphery of each of the position-limiting element (150), the second lens (120) and the third lens (130) includes at least one connecting structure (122, 124, 132, 134, 152 and 154), and
wherein the first lens (110), the position-limiting element (150), the second lens and the third lens (130) fit with each other by the at least one connecting structures (122, 124, 132, 134, 152 and 154) to stack and form the lens module (100).

2. The lens module as claimed in claim 1, further comprising a stop (ST) located at a light emitting side of the lens module (100), wherein an effective diameter of the first lens (110) is greater than an effective diameter of the stop (ST).

3. The lens module as claimed in claim 1 or 2, wherein an effective diameter of the first lens (110) is smaller than an effective diameter of the second lens (120) and an effective diameter of the third lens (130).

4. The lens module as claimed in any one of the preceding claims, wherein each lens in the lens module (100) is a plastic lens.

5. The lens module as claimed any one of the preceding claims, wherein the first lens (110) has at least one connecting structure (112), and the at least one connecting structure (112) is disposed at a periphery of the first lens (110), and wherein the periphery of the first lens (110) has a circular shape, each of the peripheries of the position-limiting element (150), the second lens (120), and the third lens (130) has a rectangular shape, wherein each of the second lens (120) and the third lens (130) has an outer shape integrally formed by extending the periphery outside its effective diameter.

6. The lens module as claimed any one of the preceding claims, wherein the at least one connecting structure (122, 124, 132, 134, 152 and 154) of each of the position-limiting element (150), the second lens (120), and the third lens (130) comprises four connecting structures respectively located at four corners.

7. The lens module as claimed any one of the preceding claims, wherein a size of the position-limiting element (150) is greater than or equal to a size of each lens in the lens module and/or an effective diameter of the second lens (120) is greater than an effective diameter of the third lens (130).

8. The lens module as claimed any one of the preceding claims, wherein the at least one connecting structure (122, 124, 132, 134, 152 and 154) is one of a mesa structure, double-mesa structure, or recess structure.

9. The lens module as claimed any one of the preceding claims, further comprising a plurality of adhesive layers (180), respectively disposed in gaps between adjacent connecting structures (122, 124, 132, 134, 152 and 154).

10. The lens module as claimed any one of the preceding claims, further comprising a fourth lens (140), wherein the third lens (130) is located between the second lens (120) and the fourth lens (140), the fourth lens (140) comprises at least one connecting structure (122, 124, 132, 134, 152 and 154) and is stacked on the third lens (130) by fitting the at least one connecting structure (122, 124, 132, 134, 152 and 154) of the fourth lens (140) with the at least one connecting structure (122, 124, 132, 134, 152 and 154) of the third lens (130).

11. The lens module as claimed in claim 10, wherein a periphery of the fourth lens (140) has a rectangular shape integrally formed by extending a periphery outside of an effective diameter of the fourth lens (140), the effective diameter of the fourth lens (140) is smaller than the effective diameter of the third lens (130).

12. The lens module as claimed in claim 10 or 11, further comprising:
a first light-shielding element (160) disposed between the second lens (120) and the third lens (130), and/or
a second light-shielding element (170) disposed between the third lens (130) and the fourth lens (140).

13. A projection device, configured to provide a projection light beam (LP) to a pupil (PS), comprising:
an optical engine module (50); and
a lens module (100) as defined in any one of the preceding claims, the lens module (100) is configured to connect with the optical engine module (50), wherein the first lens (110), the position-limiting element (150), the second lens (120) and the third lens (130) are sequentially stacked on each other from a light emitting side to a side of the optical engine module (50).

14. The projection device as claimed in claim 13, wherein the lens module (100) is located between the stop (ST) and the optical engine module (50).

15. The projection device as claimed in claim 13 or 14, further comprises a case (52) configured to connect with the optical engine module (50), wherein the lens module (100) is disposed in the case (52) and connected to the optical engine module (50), preferably an outer shape of the lens module (100) fits with inner wall of the case (52).
